# EUROPEAN PATENT APPLICATION

(11) **EP 3 690 222 A1**
(43) Date of publication of application: **05.08.2020**
(21) Application number: 20164500.9
(22) Date of filing: 16.04.2014
(51) Int. Cl.: F02D 41/02, F02D 41/14, F02B 37/18, F02D 23/02, F02D 41/40, F02M 26/05, F02D 21/08, F01N 9/00, F01N 3/021, F02D 41/38

(54) **METHOD AND APPARATUS FOR EXHAUST GAS AFTERTREATMENT DEVICE WARMING**

(30) Priority: 16.04.2013 GB 201306887
(62) Divisional of application: 14718702.5
(71) Applicant: Perkins Engines Company Limited, Cambridgeshire PE1 5FQ (GB)
(72) Inventor: NICHOLSON, Andrew, Peterborough, Cambridgeshire PE1 5FQ (GB); RUTLEDGE, Sarah, Peterborough, Cambridgeshire PE1 5FQ (GB); CUNLIFFE, Daniel, Peterborough, Cambridgeshire PE1 5FQ (GB); LADLOW, Peter, Peterborough, Cambridgeshire PE1 5FQ (GB)
(74) Representative: Boult Wade Tennant LLP

(57) **Abstract**

To help meet exhaust gas emissions standards, an internal combustion engine 110 may have an exhaust gas aftertreatment device 120 located in its exhaust gas stream. However, the exhaust gas aftertreatment device 120 may only operate effectively above a minimum threshold temperature. In the present disclosure there is provided a method and apparatus for warming the exhaust gas aftertreatment device 120 and a method and apparatus for controlling when exhaust gas aftertreatment device warming should be initiated and stopped.

## Description

### Technical field

The present disclosure relates to a method and apparatus for exhaust gas aftertreatment device warming.

### Background

An exhaust gas aftertreatment device (EATD) may be located in the exhaust gas stream of an internal combustion engine, for example a diesel engine, in order to reduce or remove gases, such as nitrogen oxide (NO or NO₂, collectively known as NOx) and/or particulate emissions, so as to meet emissions regulations. Various different types of EATD are available, for example a diesel oxidation catalyst or a selective catalytic reduction (SCR) system, for the treatment of different types of particulate emission or NOx emissions.

During operation of an EATD, the temperature of the EATD may need to be maintained above a minimum threshold temperature so that the system may operate effectively. For example, an SCR system will have a minimum threshold temperature that is dependent upon a number of factors, including the type of reductant used within the catalyst, and may be, for example 200°C or 210°C. The SCR system may require the addition of a reductant, for example anhydrous or aqueous ammonia, or urea such as an aqueous urea solution that reacts to form ammonia, into the system in order to reduce NOx levels in the exhaust gases passing through the SCR system. For example, an aqueous urea solution may be added into the system by injection into the exhaust stream. However, the SCR system must be above the minimum threshold temperature for decomposition and hydrolysis of the urea into ammonia (NH₃). If the SCR system is below the minimum threshold temperature, decomposition and hydrolysis of urea into NH₃ may not take place, in which case the SCR system may not satisfactorily reduce NOx levels. Consequently, it may be arranged that urea is only added to the SCR system when the SCR system temperature is above its minimum threshold temperature, thereby restricting operation of the SCR system to when the SCR system temperature is above the minimum threshold temperature.

When an internal combustion engine is started from cold, the SCR system may initially be cold and then be gradually warmed up by the exhaust gases. However, it may take some time for the temperature of the SCR system to exceed its minimum threshold temperature for operation. In order to meet emissions regulations, emissions may need to be compliant with the regulations within a predefined period of time from engine start up. Whether or not the emissions meet the regulations within the predefined period of time may be reliant upon whether or not the SCR system is operating before the end of the predefined period of time. Therefore, it may be desirable to decrease the time taken for the SCR system temperature to reach its minimum threshold temperature for operation.

### Summary

In a first aspect of the present disclosure there is provided a method for controlling the operation of an exhaust gas aftertreatment device warm-up strategy for increasing a temperature of an exhaust gas aftertreatment device located in an exhaust gas stream of an internal combustion engine, the method comprising the steps of: initiating the warm-up strategy when the internal combustion engine is operating, a temperature of the internal combustion engine exceeds an engine temperature threshold and an exhaust gas aftertreatment device temperature is less than a first exhaust gas aftertreatment device temperature threshold; and the warm-up strategy is stopped when the exhaust gas aftertreatment device temperature exceeds a second exhaust gas aftertreatment device temperature threshold.

In a second aspect of the present disclosure there is provided a method for increasing a temperature of an exhaust gas aftertreatment device located in an exhaust gas stream of an internal combustion engine, the method comprising at least two of the following: retarding a timing of fuel injection into a cylinder of the internal combustion engine; increasing a dwell time between a pilot fuel injection and a main fuel injection into a cylinder of the internal combustion engine; and reducing an air-fuel ratio of the internal combustion engine.

In a third aspect of the present disclosure there is provided a controller for controlling the operation of an exhaust gas aftertreatment device warm-up strategy for increasing a temperature of an exhaust gas aftertreatment device located in an exhaust gas stream of an internal combustion engine, the controller being configured to: initiate the warm-up strategy when the internal combustion engine is operating, a temperature of the internal combustion engine exceeds an engine temperature threshold and an exhaust gas aftertreatment device temperature is less than a first exhaust gas aftertreatment device temperature threshold; and stop the warm-up strategy when the exhaust gas aftertreatment device temperature exceeds a second exhaust gas aftertreatment device temperature threshold.

In a fourth aspect of the present disclosure there is provided a controller for increasing a temperature of an exhaust gas aftertreatment device located in an exhaust gas stream of an internal combustion engine, the controller being configured to perform at least two of the following: retard a timing of fuel injection into a cylinder of the internal combustion engine; increase a dwell time between a pilot fuel injection and a main fuel injection into a cylinder of the internal combustion engine; and reduce an air-fuel ratio of the internal combustion engine.

### Aspects of the Invention

Aspects of the invention are set forth in the following numbered clauses:
1. A method for controlling the operation of an exhaust gas aftertreatment device warm-up strategy for increasing a temperature of an exhaust gas aftertreatment device located in an exhaust gas stream of an internal combustion engine, the method comprising the steps of:
   initiating the warm-up strategy when the internal combustion engine is operating, a temperature of the internal combustion engine exceeds an engine temperature threshold and an exhaust gas aftertreatment device temperature is less than a first exhaust gas aftertreatment device temperature threshold; and
   stopping the warm-up strategy when the exhaust gas aftertreatment device temperature exceeds a second exhaust gas aftertreatment device temperature threshold.
2. The method of clause 1, further comprising a step of stopping the warm-up strategy when a quantity of the fuel burned by the internal combustion engine since the warm-up strategy was initiated exceeds a fuel quantity threshold.
3. The method of clause 1 or clause 2, further comprising a step of stopping the warm-up strategy when a measured soot content in a diesel particulate filter located in the exhaust gas stream of the internal combustion engine exceeds a soot threshold.
4. The method of any preceding clause, wherein the exhaust gas aftertreatment device warm-up strategy comprises at least one of:
   retarding a timing of fuel injection into a cylinder of the internal combustion engine;
   increasing a dwell time between a pilot fuel injection and a main fuel injection into a cylinder of the internal combustion engine; and
   reducing an air-fuel ratio of the internal combustion engine.
5. The method of clause 4, wherein a turbocharger system comprising a turbocharger and a wastegate is arranged with the internal combustion engine and an air-fuel ratio of the internal combustion engine is reduce by increasing the degree to which the wastegate is open.
6. The method of either clause 4 or clause 5, wherein an exhaust gas recirculation system is arranged with the internal combustion engine and the air-fuel ratio of the internal combustion engine is reduced by increasing an amount of exhaust gas recirculation.
7. The method of any preceding clause, further comprising a step of:
   increasing a fuel injection pressure when the warm-up strategy is in operation.
8. A method for increasing a temperature of an exhaust gas aftertreatment device located in an exhaust gas stream of an internal combustion engine, the method comprising at least two of:
   retarding a timing of fuel injection into a cylinder of the internal combustion engine;
   increasing a dwell time between a pilot fuel injection and a main fuel injection into a cylinder of the internal combustion engine; and
   reducing an air-fuel ratio of the internal combustion engine.
9. The method of clause 8, wherein a turbocharger system comprising a turbocharger and a wastegate is arranged with the internal combustion engine and the air-fuel ratio of the internal combustion engine is reduced by increasing the degree to which the wastegate is open.
10. The method of either clause 8 or clause 9, wherein an exhaust gas recirculation system is arranged with the internal combustion engine and the air-fuel ratio of the internal combustion engine is reduced by increasing an amount of exhaust gas recirculation.
11. The method of any one of clauses 8 to 10, further comprising a step of:
   increasing a fuel injection pressure.
12. A controller for controlling the operation of an exhaust gas aftertreatment device warm-up strategy for increasing a temperature of an exhaust gas aftertreatment device located in an exhaust gas stream of an internal combustion engine, the controller being configured to:
   initiate the warm-up strategy when the internal combustion engine is operating, a temperature of the internal combustion engine exceeds an engine temperature threshold and an exhaust gas aftertreatment device temperature is less than a first exhaust gas aftertreatment device temperature threshold; and
   stop the warm-up strategy when the exhaust gas aftertreatment device temperature exceeds a second exhaust gas aftertreatment device temperature threshold.
13. A controller for increasing a temperature of an exhaust gas aftertreatment device located in an exhaust gas stream of an internal combustion engine, the controller being configured to perform at least two of:
   retard a timing of fuel injection into a cylinder of the internal combustion engine;
   increase a dwell time between a pilot fuel injection and a main fuel injection into a cylinder of the internal combustion engine; and
   reduce an air-fuel ratio of the internal combustion engine.
14. An internal combustion engine arrangement comprising:
   an internal combustion engine; and
   the controller of clause 12 or clause 13.
15. A vehicle comprising the internal combustion engine arrangement of clause 14.

### Brief description of the drawings

A method and apparatus for exhaust gas aftertreatment device warming in accordance with aspects of the present disclosure shall now be described, by way of example only, with reference to the following drawings, in which:
Figure 1 shows an internal combustion engine arrangement comprising an internal combustion engine and an exhaust gas after treatment device;
Figure 2 shows an internal combustion engine arrangement comprising an internal combustion engine, an exhaust gas after treatment device, a turbocharger and an exhaust gas recirculation arrangement;
Figure 3 shows an example vehicle in which the internal combustion engine arrangement of Figures 1 or 2 may be used.

### Detailed description

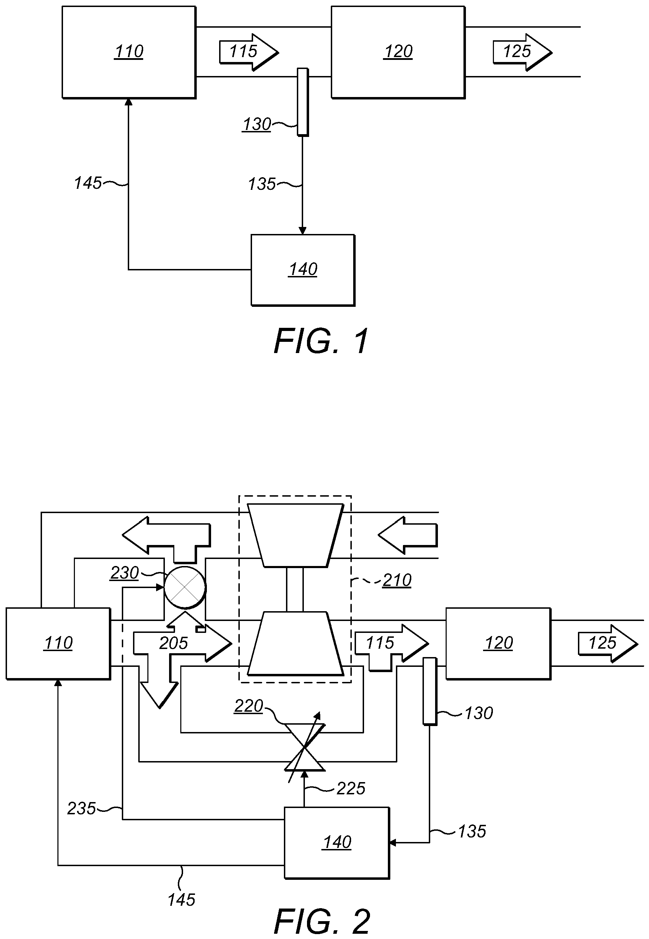

Figure 1 shows an internal combustion engine 110, for example a diesel engine, at the exhaust gas outlet of which is located an exhaust gas after treatment device (EATD) 120, for example an SCR device. Exhaust gas 115 emitted from the internal combustion engine 110 passes through the EATD 120 and exits the EATD 120 as downstream exhaust gas 125. The EATD 120 may have a minimum operating temperature, below which it is not effective at treating the exhaust gas 115 to reduce or remove gases, such as NOx. If the EATD 120 is not operating effectively, the gaseous composition of the downstream exhaust gas 125 may not meet emissions standards.

A temperature sensor 130 may be located in the exhaust gas path upstream of the EATD 120 and measure the temperature of the exhaust gas 115. The exhaust gas temperature measurement 135 may be sent to a controller 140 which may control the operation of the internal combustion engine 110 using control line 145.

When the internal combustion engine 110 is started, the EATD 120 may be relatively cold and below its minimum operating temperature. If the temperature of the EATD 120 is below its minimum operating temperature, it may be desirable to take action to raise its temperature above the minimum operating temperature more quickly so that the EATD 120 may operate fully and treat the exhaust gases passing through it.

After the internal combustion engine 110 is started, the controller 140 will consider a measurement of the EATD temperature and a measurement of the internal combustion engine temperature to determine whether or not an EATD warm-up strategy should be initiated.

A measurement of the engine coolant temperature may be indicative of the internal combustion engine temperature. Therefore, the engine coolant temperature may be used as a measurement of the internal combustion engine temperature. If the internal combustion engine temperature is less than an engine temperature threshold, for example 65°C, it may be preferable not to initiate the EATD warm-up strategy in order to protect the internal combustion engine 110 from damage caused by, for example, engine combustion misfiring during low engine loads, or where there is an exhaust gas recirculation heat exchanger associated with the internal combustion engine 110, fouling of the exhaust gas recirculation heat exchanger from excessive condensate build-up.

If, however, the measurement of the internal combustion engine temperature exceeds the engine temperature threshold, it may be considered that the internal combustion engine 110 is operating at a temperature sufficient to initiate the EATD warm-up strategy.

The engine temperature threshold may be set at any suitable level in consideration of, for example, at least one of engine size, engine type and expected operating conditions. The engine coolant temperature may be determined using any technique well known to the skilled person, for example using a temperature sensor located within the engine coolant.

The temperature of the EATD 120 may be influenced by the temperature of the exhaust gas 115. Therefore, the EATD temperature may be inferred by the controller 140 from the exhaust gas temperature measurement 135. If the measured temperature of the EATD 120, determined, for example, by the temperature sensor 130, is below a first EATD threshold temperature, for example 210°C, it may be considered that the EATD 120 is below its minimum operation temperature and that the EATD warm-up strategy may be initiated. However, if it is above the first EATD threshold temperature, it may be considered that the EATD 120 is operating and, therefore, the EATD warm-up strategy may not be initiated.

The first EATD threshold temperature may be set at any suitable value below which it may be considered that the EATD 120 is too cold to operate, and above which it may be considered that it is operating. For example, it may be set at the minimum operating temperature of the EATD, or it may be set at a value above the minimum operating temperature.

Therefore, after starting the internal combustion engine 110, if the measured internal combustion engine temperature is above the engine temperature threshold and the EATD temperature is below the first EATD temperature threshold, the EATD warm-up strategy will be initiated. If, however, after starting the internal combustion engine 110, either the internal combustion engine temperature is below the engine temperature threshold or the measurement EATD temperature is above the first EATD temperature threshold, the EATD warm-up strategy will not be initiated.

The EATD warm-up strategy may include a number of different techniques that may help to increase the temperature of the EATD 120. For example, where each engine cycle comprises two fuel ignition events, a pilot fuel injection and a main fuel injection, a dwell time between the pilot fuel injection and the main fuel injection may be increased compared with the normal engine control strategy. By increasing the dwell time, the main injection, and therefore also the main combustion, may be retarded, i.e. the main combustion may take place later in the engine cycle. A consequence of this is that the exhaust gas may be hotter at the time the exhaust valve opens and the exhaust gases are expelled from the engine cylinder. As the hotter exhaust gas passes through the EATD 120, the EATD temperature may be increased more quickly.

Furthermore, or alternatively, the timing of engine fuel injection into the engine cylinders may be delayed. Where each engine cycle comprises only a single fuel injection event, the timing of fuel injection may be delayed relative to the fuel injection timing during the normal engine control strategy, so that combustion is retarded, for example to 8° beyond top dead centre (TDC) of the piston. Where each engine cycle comprises two fuel injection events, both the timing of the pilot injection and the main injection may be delayed relative to their timings during the normal engine control strategy, regardless of whether or not the dwell time is also increased relative to the normal engine control strategy. By delaying fuel injection and therefore retarding the fuel combustion timing, the temperature of the exhaust gas 115 may be increased, thus increasing the EATD temperature, as explained above.

The controller 140 may determine fuel injection timing using a control map. There may be a control map that is used for the normal engine control strategy and a different control map that is used when the EATD warm-up strategy is initiated. The control maps may consider a number of different engine operating parameters, for example air temperature, air pressure, engine speed, throttle position etc, when determining the fuel injection timings. Where there is both a pilot injection and main injection, any variations in dwell time may also have an effect on the degree of injection timing delay that may be possible before combustion misfire may occur. Therefore, the control map used during the EATD warm-up strategy may adjust both the dwell time and the injection timing delay in tandem so as to optimise both factors.

Figure 2 shows an internal combustion engine arrangement similar to that shown in Figure 1, but with a turbocharger 210 located in the exhaust gas outlet stream and the engine air intake stream. The turbocharger 210 may have a turbine that is driven by exhaust gas 205 output from the internal combustion engine 110 and a compressor that compresses the air at the engine air intake. A wastegate 220 may act in conjunction with the turbocharger 210 such that as the degree of waste gate opening is increased, more exhaust gas is diverted away from the turbine of the turbocharger 210, thus reducing the boost pressure achieved by the compressor of the turbocharger 210 at the engine air intake.

As part of the exhaust gas after treatment device warm-up strategy, the degree of opening of the wastegate 220 may be increased in order to reduce boost pressure and, therefore, reduce the air-fuel ratio (AFR) in the internal combustion engine 110. When the internal combustion engine 110 runs lean (i.e. beyond stoichiometric), as may be the case for diesel engines, a reduction in AFR may increase the temperature of the exhaust gases 205 and 115. Furthermore, when the wastegate 220 is arranged such that exhaust gas passing through the wastegate 220 is reintroduced to the exhaust gas 115 downstream of the turbocharger 210 and upstream of the EATD 120 (as shown in Figure 2) the temperature of the exhaust gas through the EATD 120 may be even further increased by reducing the work done by the exhaust gas passing through the turbine of the turbocharger 210.

The degree of opening of the wastegate 220 is controlled by the controller 140 using a wastegate control line 225. The controller 140 may use control maps to determine the operation of the wastegate 220. There may be a first control map that is used to control the wastegate 220 during normal engine operation, and a second control map that is used when the EATD warm-up strategy is implemented, wherein the second control map opens the wastegate 220 to a greater extent than the first control map. The control maps may consider a number of different engine operating parameters, for example air temperature, air pressure, engine speed, throttle position etc, when determining the operation of the wastegate 220.

Figure 2 also shows an exhaust gas recirculation (EGR) arrangement, designed to recirculate exhaust gases from the exhaust gas 205 into the air intake of the internal combustion engine 110. The amount of exhaust gas that is recirculated by the EGR arrangement may be controlled by an EGR valve 230, which allows a greater amount of exhaust gas recirculation when the EGR valve 230 is open to a greater degree. The degree of opening of the EGR valve 230 is controlled by the controller 140 using an EGR valve control line 235.

Opening the EGR valve 230 to a greater extent may have two effects. The first effect may reduce the temperature of gases in the cylinders of the internal combustion engine 110 and in the exhaust gases 205 and 115. This is because the recirculated exhaust gas may include more CO₂ than O₂. CO₂ has a higher specific heat capacity than O₂, so the CO₂ may absorb more heat and thus reduce the temperature of the gases in the cylinders and in the exhaust gases 205 and 115.

The second effect is to reduce the amount of O₂ at the air inlet of the internal combustion engine 110, thus lowering the AFR. As explained above, a reduction in AFR results in an increase in the temperature of the exhaust gases 205 and 115.

Because the second effect is greater than the first effect, increasing the degree of opening of the EGR valve 230 may have a net result of an increase in the temperature of the exhaust gases 205 and 115. Therefore, the degree of opening of the EGR valve 230 may be used as part of the EATD warm-up strategy.

The controller 140 may use control maps to determine the operation of the EGR valve 230. There may be a first control map that is used to control the EGR valve 230 during normal engine operation, and a second control map that is used when the EATD warm-up strategy is implemented, wherein the second control map opens the EGR valve 230 to a greater extent than the first control map. The control maps may consider a number of different engine operating parameters, for example air temperature, air pressure, engine speed, throttle position etc, when determining the operation of the EGR valve 230.

The exhaust gas recirculation device warm-up strategy may utilise at least two of the warm-up techniques described above, that is: increasing fuel injection dwell time; delaying fuel injection timings; opening the wastegate 220 to a greater degree and opening the EGR valve 230 to a greater degree. Each of these techniques may have an effect on the operation of the other techniques. For example, the fuel injection dwell time may affect the extent to which fuel injection timings may be delayed, and the extent to which the wastegate 220 is open and the EGR valve 230 is open may both affect the AFR, so that to achieve a desired AFR, the degree of opening of one valve should be controlled with consideration to the degree of opening of the other valve.

Therefore, in order to balance the requirements and results of each of the different techniques that are implemented as part of the EATD warm-up strategy, the control maps controlling each of the different techniques may be interconnected, such that, for example, a change in the fuel injection dwell time may have an effect on the wastegate 220 opening, and vice-versa.

When the EATD warm-up strategy is initiated, there may be an increase in unwanted exhaust gas emissions, for example increased soot and/or NOx in the exhaust gas 115. An increase in soot may be caused, at least in part, by imperfect fuel combustion when fuel ignition timing is delayed until later in the engine cycle, as a result of at least one of an increase in dwell time or a delay in fuel injection timing.

Therefore, whilst it may be desirable to increase the temperature of the exhaust gas 115, and therefore also the temperature of the EATD 120, by as much as possible whilst the EATD warm-up strategy is operating, the consequential increase in exhaust gas emissions caused by the warm-up strategy may also need to be considered.

Thus, the control maps used for the EATD warm-up strategy may be optimised to achieve a balance between increasing the temperature of the exhaust gas 115, whilst still maintaining exhaust gas emissions within acceptable bounds.

Furthermore, in order to reduce the level of soot generation whilst the EATD warm-up strategy is in operation, the fuel injection rail pressure may be increased. By increasing the fuel injection pressure, a more homogenous air-fuel mixture may be achieved within the cylinders of the internal combustion engine 110, which may improve combustion within the cylinders and reduce soot generation.

Once the EATD warm-up strategy has been initiated, the controller 140 will stop the strategy and return to a normal engine control strategy when the EATD temperature is above a second EATD temperature threshold. The second EATD temperature threshold may be set at a level above which it is considered that a return to the normal engine control strategy should not result in the temperature of the EATD 120 falling below its minimum operating temperature. The second EATD temperature threshold may be, for example, 250°C.

However, it is possible that the EATD warm-up strategy may run for a long period of time before the EATD temperature exceeds the second EATD temperature threshold. As explained above, whilst the EATD warm-up strategy is operating, there may be an increase in exhaust gas emissions, such as soot. Furthermore, the efficiency of the internal combustion engine 110 may also be reduced, for example as a result of operating closer to the mechanical limits of the internal combustion engine 110. Furthermore, operating the EATD warm-up strategy may also affect the durability and/or life of the internal combustion engine 110. For example, where there is an exhaust gas recirculation heat exchanger arranged with the internal combustion engine 110, high soot rates at low exhaust gas temperatures during operation of the EATD warm-up strategy may cause exhaust gas recirculation heat exchanger fouling, which may affect the durability and/or life of the internal combustion engine 110.

Also, it may be expected that if the internal combustion engine 110 is operating well, the EATD 120 should reach the second EATD temperature threshold within a reasonable period of time. If it takes longer, it may be because the internal combustion engine 110 is not operating properly, in which case it may be preferable to stop the EATD warm-up strategy. Therefore, operating the EATD warm-up strategy for a long period of time may not be desirable.

It may be arranged that, even if the EATD temperature has not reached the second EATD temperature threshold, the controller 140 will exit the strategy and return to a normal engine control strategy if the time spent operating in the EATD warm-up strategy has exceeded a threshold time period.

Alternatively, rather than using a threshold time period, it may be arranged that even if the EATD temperature has not reached the second exhaust gas after treatement device temperature threshold, the controller 140 will exit the warm-up strategy and return to a normal engine control strategy if the quantity of fuel burned by the internal combustion engine 110 since the EATD warm-up strategy was initiated has exceeded a fuel quantity threshold.

When the internal combustion engine 110 is working hard, for example a vehicle being powered by the internal combustion engine 110 is roading, a greater volume of exhaust emissions may be generated per unit time compared with when the internal combustion engine 110 is idling. Furthermore, damage to the internal combustion engine 110 may occur more quickly when the internal combustion engine 110 is working hard compared with idling. Furthermore, it may be expected that when the internal combustion engine 110 is working hard, the EATD 120 should warm up more quickly compared with when the internal combustion engine 110 is idling, and so the EATD warm-up strategy should be allowed a shorter period of time to increase the EATD 120 temperature. Therefore, by monitoring fuel consumption, the exhaust gas after treatement device warm-up strategy may be allowed to operate for a variable amount of time, dependent on how hard the internal combustion engine 110 is working, before exiting and returning to a normal engine control strategy.

As explained above, whilst operating the EATD warm-up strategy, an increased amount of soot might be generated. If a diesel particulate filter (DPF) is located in the exhaust gas stream, the DPF may fill up with soot which may lead to damage if excessive soot is accumulated. The amount of soot in the DPF may be monitored by the controller 140 using, for example, a radio frequency (RF) sensor across the DPF. If the measured soot content in the DPF exceeds a soot threshold, it may be considered that there is a dangerous level of soot in the DPF and that the controller 140 should exit the EATD warm-up strategy and return to a normal engine control strategy, in order to reduce the amount of soot in the exhaust gas 205 and 115, and therefore reduce the amount of soot going into the DPF.

Therefore, it may be arranged that the controller 140 exits the EATD warm-up strategy when at least one of the following conditions is met: the EATD temperature exceeds a second EATD temperature threshold; the amount of fuel burned by the internal combustion engine 110 exceeds a fuel quantity threshold; or the soot level in the DPF exceeds a soot threshold.

Figures 1 and 2 show a controller 140 that may be used to implement the above described aspects of the disclosure.

The controller 140 may have an input for the exhaust gas temperature measurement 135, which may be used to measure the temperature of an EATD 120, and an output for a control line 145 for controlling the operation of an internal combustion engine 110. The controller 140 may also have an output for a wastegate control line 225 for controlling the degree of opening of a wastegate 220, and an output for an EGR valve control line 235 for controlling the degree of opening of an EGR valve 230.

The controller 140 may be implemented as a stand-alone control unit, or may be incorporated into an engine control unit.

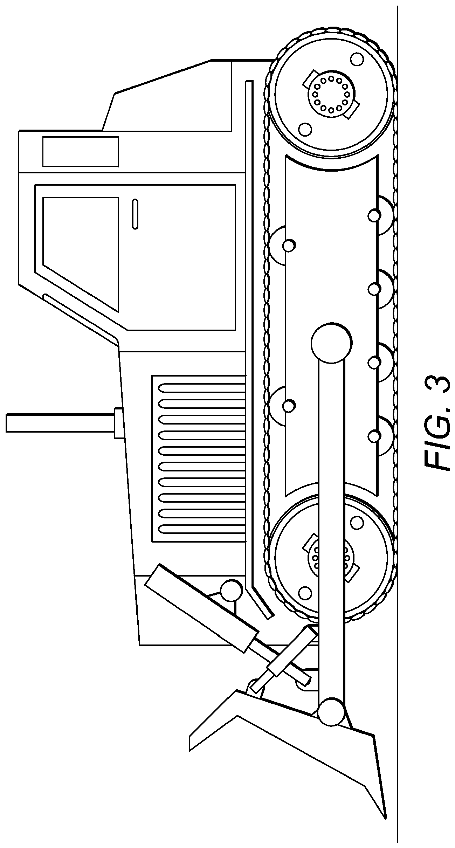

Figure 3 shows an example vehicle within which the internal combustion engine arrangements shown in Figures 1 and 2 may be used.

The skilled person will readily appreciate that a number of alternatives to the aspects of the disclosure described above may be used.

For example, the temperature of the EATD 120 may be determined by any means well known to the skilled person. For example, rather than using a temperature sensor 130 located upstream of the EATD 120, the EATD temperature may be determined using temperature sensor located downstream of the EATD 120, or using a temperature sensor located within the EATD 120, or some combination of temperature sensors located upstream, within and/or downstream of the EATD 120. Alternatively, the temperature of the EATD may be estimated from at least one engine operating condition, for example air temperature, air pressure, engine speed, throttle position etc.

Furthermore, the temperature of the internal combustion engine 110 may be determined by any means known to the skilled person, for example temperature sensors located in the internal combustion engine 110 may be used, or the temperature may be estimated from at least one engine operating condition, for example air temperature, air pressure, engine speed, throttle position etc.

Furthermore, whilst the EGR arrangement shown in Figure 2 draws exhaust gas 205 from upstream of the turbine of the turbocharger 210 and recirculates it downstream of the compressor of the turbocharger 210, exhaust gases may instead be drawn from any point in the exhaust gas stream and recirculated to any point in the air intake stream.

Furthermore, whilst opening the wastegate 220 is shown in Figure 2 to result in the exhaust gases bypassing the turbine of the turbocharger 210 and being reintroduced to the exhaust gas stream upstream of the EATD 120, the bypassed exhaust gasses may instead be reintroduced to the exhaust gas stream at any point downstream of the turbine of the turbocharger 210, or vented directly into the atmosphere, or some combination of the two.

Furthermore, whilst Figure 2 shows an internal combustion engine arrangement with a turbocharger 210 and an EGR arrangement, the internal combustion engine arrangement may instead comprise only one of a turbocharger 210 and an EGR arrangement, in which case the EATD warm-up strategy may make use of whichever exhaust gas warm-up techniques are available from the components in the engine arrangement.

Furthermore, in addition to, or as an alternative to, opening the wastegate 220 or the EGR valve 230, any technique for reducing AFR may be used, for example using a back-pressure valve associated with the turbocharger 210.

Furthermore, whilst the examples of the first and second EATD temperature thresholds are different in the above described aspects of the disclosure, they may alternatively be the same value.

### Industrial applicability

The present disclosure provides a method and apparatus for increasing the temperature of an exhaust gas aftertreatment device and a method and apparatus for controlling the operation of an exhaust gas aftertreatment device warm-up strategy. After starting an internal combustion engine, an exhaust gas after treatment device may not be able to reach a required minimum temperature for operation quickly enough to meet emissions standards. Therefore, by using the exhaust gas after treatment device warm-up strategy after starting the internal combustion engine, the exhaust gas after treatment device may reach its minimum temperature for operation more quickly so that the exhaust gases may meet emissions standards.

## Claims

1. A method for increasing a temperature of an exhaust gas after treatment device located in an exhaust gas stream of an internal combustion engine, the method comprising at least two of:
retarding a timing of fuel injection into a cylinder of the internal combustion engine;
increasing a dwell time between a pilot fuel injection and a main fuel injection into a cylinder of the internal combustion engine; and
reducing an air-fuel ratio of the internal combustion engine.

2. The method of claim 1, wherein a turbocharger system comprising a turbocharger and a wastegate is arranged with the internal combustion engine and the air-fuel ratio of the internal combustion engine is reduced by increasing the degree to which the wastegate is open.

3. The method of either claim 1 or claim 2, wherein an exhaust gas recirculation system is arranged with the internal combustion engine and the air-fuel ratio of the internal combustion engine is reduced by increasing an amount of exhaust gas recirculation.

4. The method of any one of claims 1 to 3, further comprising a step of:
increasing a fuel injection pressure.

5. A controller for increasing a temperature of an exhaust gas after treatment device located in an exhaust gas stream of an internal combustion engine, the controller being configured to perform at least two of:
retard a timing of fuel injection into a cylinder of the internal combustion engine;
increase a dwell time between a pilot fuel injection and a main fuel injection into a cylinder of the internal combustion engine; and
reduce an air-fuel ratio of the internal combustion engine.

6. An internal combustion engine arrangement comprising:
an internal combustion engine; and
the controller of claim 5.

7. The internal combustion engine arrangement of claim 6 further comprising a turbocharger system arranged with the internal combustion engine, wherein the turbocharger system comprises a turbocharger and a wastegate.

8. The internal combustion engine arrangement of claim 7 wherein the controller is configured to reduce the air-fuel ratio of the internal combustion engine by increasing the degree to which the wastegate is open.

9. The internal combustion engine arrangement of claim 7 or claim 8 further comprising an exhaust gas recirculation system arranged with the internal combustion engine.

10. The internal combustion engine arrangement of claim 9 wherein the controller is configured to reduced the air-fuel ratio of the internal combustion engine by increasing an amount of exhaust gas recirculation.

11. The internal combustion engine of any of claims 6 to 10 wherein the controller is further configured to increase a fuel injection pressure.

12. A vehicle comprising the internal combustion engine arrangement of any of claims 6 to 11.
